# EUROPEAN PATENT SPECIFICATION

(11) **EP 2 423 806 B1**
(45) Date of publication and mention of the grant of the patent: **26.08.2015**
(21) Application number: 09845110.7
(22) Date of filing: 11.12.2009
(51) Int. Cl.: G06F 3/16, H04W 88/02, G06F 13/38

(54) **METHOD AND DEVICE FOR TRANSMITTING UNIVERSAL SERIAL BUS AUDIO DATA THROUGH A WIRELESS DATA TERMINAL**
VERFAHREN UND VORRICHTUNG ZUR ÜBERTRAGUNG VON USB-AUDIODATEN ÜBER EIN DRAHTLOSES DATENENDGERÄT
PROCÉDÉ ET DISPOSITIF DE TRANSMISSION DE DONNÉES AUDIO PAR BUS SÉRIE UNIVERSEL POUR TERMINAL DE DONNÉES SANS FIL

(30) Priority: 25.05.2009 CN 200910085521
(43) Date of publication of application: 29.02.2012
(73) Proprietor: ZTE Corporation, Shenzhen, Guangdong 518057 (CN)
(72) Inventor: GONG, Wenqiang, Shenzhen Guangdong 518057 (CN); JIANG, Chengzhi, Shenzhen Guangdong 518057 (CN); GUO, Suguang, Shenzhen Guangdong 518057 (CN)
(74) Representative: Jansen, Cornelis Marinus
(86) International application number: PCT/CN2009/075508
(87) International publication number: WO 2010/135894

(56) References cited:
- EP-A1- 1 863 262
- CN-A- 101 212 750
- CN-A- 101 566 940
- CN-Y- 200 950 579
- US-A1- 2008 104 289
- US-B1- 6 879 865

## Description

### TECHNICAL FIELD

The present invention relates to the field of an audio data transmission technology, and particularly to a method and a device for transmitting audio data over universal serial bus by a wireless data terminal.

### BACKGROUND

At present, a Time Division-Synchronous Code Division Multiple Access (TD-SCDMA) technology, as the 3^{rd} Generation Mobile Communication Standard put forward by China, has become more and more mature. Supported by the TD-SCDMA technology, the speeds of downloading data from a network and uploading data to a network are greatly increased, thus certainly increasing the demand of users for audio services and video services.

Currently, when processing audio data, a wireless data terminal directly sends an analog audio signal received via an air interface to the corresponding hardware equipment, such as a radio frequency device and a codec etc., to be demodulated and decoded, and finally played by a loudspeaker. An analog audio signal which is acquired by a microphone and needs to be sent are sent after being coded and modulated by the corresponding hardware equipment, such as a codec and radio frequency device etc. Such an audio data processing method has the following disadvantage: since audio data needs to be coded and decoded, a corresponding codec should be provided for a wireless data terminal, thereby increasing hardware cost.

In order to overcome the disadvantage of the aforementioned audio data processing method, Voice Over USB (VOUSB) is used as a relatively popular realization method currently, which will be simply described by taking a widely-applied Personal Computer (PC) serving as the terminal equipment as an example. A wireless data terminal transmits demodulated audio data to the PC over Universal Serial Bus (USB) interface, and the demodulated audio data are processed, such as decoded etc; similarly, the audio data having been processed (such as coded etc.) in the PC is transmitted to the wireless data terminal via a USB interface. In this way, the wireless data terminal does not need a codec on the hardware, thereby reducing the hardware cost. In addition, compared with the wireless data terminal, the PC has a stronger computing capability and more memory resources, thus providing a more powerful audio data processing capability to perform more rich processing, such as de-noising, retouching and audio-mixing etc.

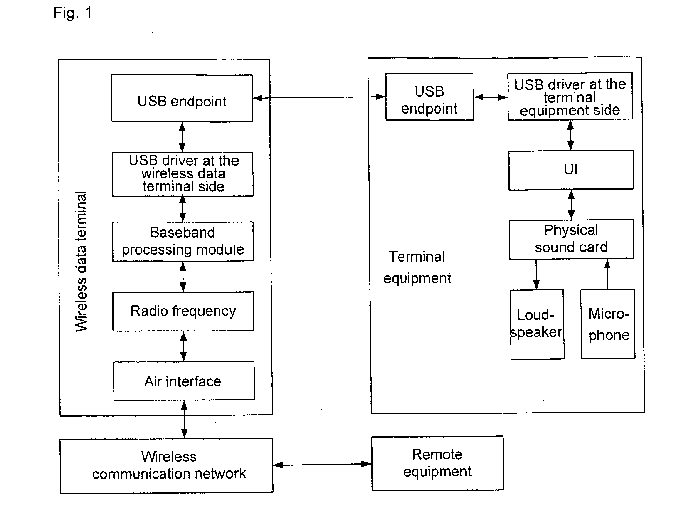

Fig. 1 shows a schematic diagram illustrating a solution for realizing a VOUSB in the existing technology. As shown in Fig. 1, an air interface of a wireless data terminal receives an analog audio signal which is sent from remote equipment through a wireless communication network and transmits the analog audio signal to a radio frequency to be demodulated. Subsequently, a baseband processing module performs amplification and digital filtering processing on the demodulated audio signal to obtain a Pulse Code Modulation (PCM) code stream which is then transmitted to a USB driver at the wireless data terminal side, further the PCM code stream is transmitted to a USB endpoint of the wireless data terminal by the USB driver at the wireless data terminal side, and then the PCM code stream is transmitted to a USB endpoint of the terminal equipment through the USB endpoint of the wireless data terminal according to a bulk transmission mode of a USB standard. Here, the USB driver at the wireless data terminal side is used for receiving the audio data from the baseband processing module and transmitting the audio data to the USB endpoint of the wireless data terminal, or is used for reading the audio data from the USB endpoint of the wireless data terminal and transmitting the audio data to the baseband processing module. The bulk transmission mode of the USB standard supports massive data transmission within an undetermined period of time, which can ensure the data transmission accuracy. However, since the transmission bandwidth and delay cannot be guaranteed, the real-time performance of the data transmission is bad. In addition, the terminal equipment is not provided with a standard equipment driver to process the audio data transmitted according to the bulk transmission mode of the USB standard, thus it will need an application User Interface (Ul) to process the audio data, wherein an implementation method of an audio data processing by an application UI is as follows:
a PCM code stream sent from the wireless data terminal to the USB endpoint of the terminal equipment is read by the USB driver at the terminal equipment side, and further is read from the USB driver and processed by a Ul of the terminal equipment, and subsequently the processed PCM code stream is transmitted to a physical sound card; the physical sound card decodes the transmitted PCM code stream which then undergoes A/D conversion to acquire an analog audio signal; the analog audio signal is finally sent to a loudspeaker to be played; wherein the physical sound card can be a Peripheral Component Interconnect (PCI) interface sound card or a USB sound card etc.; here, the USB driver at the terminal equipment side is used for reading the audio data from the USB endpoint of the terminal equipment and transmitting the audio data to the Ul, or is used for acquiring the audio data from the Ul and transmitting the audio data to the USB endpoint of the terminal equipment.

The aforementioned description shows that, in the realization solution for the VOUSB, the USB audio data transmission channel between the wireless data terminal and the terminal equipment only functions as a data transmission channel, thus resulting in a problem that it does not perform special optimization according to the characteristics of the audio data transmission, which influences the effect of the VOUSB in practical application with respect to real-time performance and etc.

It is noted that patent publication US 6879865 B1 discloses a system and method that allows a host PC to provide an analog audio signal for a radio or a amplifier without interfering with the operation of the host PC. The system also allows the audio signal to be selected and controlled by a remote device without interfering with the operation of the host PC.

### SUMMARY

In view of this, the main purpose of the present invention is to provide a method and a device for transmitting audio data over USB by a wireless data terminal, which fully utilizes the powerful audio data processing capability of the terminal equipment to enhance the effectiveness of the VOUSB in the practical application.

In order to solve the aforementioned technical problem, the technical solution of the present invention is realized as follows.

A method for transmitting audio data over USB by a wireless data terminal, wherein a USB audio data transmission channel between a wireless data terminal and a terminal equipment is set as USB sound card equipment, wherein the method comprises:
the wireless data terminal sends audio data to the terminal equipment through the USB sound card equipment and the terminal equipment uses its audio equipment driver to access the USB sound card equipment to acquire the audio data; and
the terminal equipment uses its audio equipment driver to send the audio data to the USB sound card equipment, and the wireless data terminal receives the audio data through the USB sound card equipment.

The step of the USB audio data transmission channel between the wireless data terminal and the terminal equipment is set as the USB sound card equipment may comprise:
the wireless data terminal defines a USB endpoint of the wireless data terminal, the USB endpoint transmits the audio data as a sound card, and the USB endpoint of the wireless data terminal is connected to a terminal equipment USB endpoint via a USB data cable;
the terminal equipment sends a request to the wireless data terminal for acquiring a device descriptor, a configuration descriptor and a descriptor assemble; after receiving the request, the wireless data terminal sends the device descriptor, the configuration descriptor and the descriptor assemble to the terminal equipment; and
after determining that a USB driver can be provided according to the device descriptor, the configuration descriptor and the descriptor assemble, the terminal equipment loads a corresponding audio equipment driver in accordance with a USB specification and the audio equipment driver configures the sound card to obtain the USB sound card equipment.

The terminal equipment may comprise an audio equipment driver, a UI and a physical sound card;
the step that the terminal equipment uses its audio equipment driver to access the USB sound card equipment to acquire audio data may comprise that: the audio equipment driver accesses the USB sound card equipment in a manner of accessing an interface of the USB sound card equipment, releases and reads a PCM code stream transmitted to the USB sound card equipment; the UI accesses the audio equipment driver via an audio equipment interface and transmits the PCM code stream to the physical sound card

The terminal equipment may comprise an audio equipment driver, a UI and a physical sound card;
the step that the terminal equipment uses its audio equipment driver to send audio data to the USB sound card equipment, may comprise that: the physical sound card acquires a PCM code stream from an analog audio signal; the UI acquires the PCM code stream from the physical sound card and transmits the PCM code stream to the audio equipment driver via an audio equipment interface of the audio equipment driver; the audio equipment driver sends the PCM code stream to the USB sound card equipment.

The step that the wireless data terminal transmits audio data to the terminal equipment through the USB sound card equipment may comprise that: a baseband processing module of the wireless data terminal transmits a PCM code stream acquired after being processed to a USB driver at the wireless data terminal side of the USB sound card equipment.

The step that the wireless data terminal receives audio data through the USB sound card equipment may comprise that: a baseband processing module of the wireless data terminal acquires a PCM code stream transmitted to a USB endpoint of the wireless data terminal through a USB driver at the wireless data terminal side of the USB sound card equipment.

A device for transmitting USB audio data through a wireless data terminal, comprises:
a wireless data terminal, which is configured to send audio data to a terminal equipment through a USB sound card equipment, and further which is configured to receive the audio data from the terminal equipment through the USB sound card equipment;
a USB sound card equipment, which is set based on a USB audio data transmission channel between the wireless data terminal and the terminal equipment, and configured to transmit the audio data between the wireless data terminal and the terminal equipment;
a terminal equipment, which is configured to use its audio equipment driver to access the USB sound card equipment to acquire audio data from the wireless data terminal and further configured to use its audio equipment driver to send the audio data to the USB sound card equipment.

The USB sound card equipment may comprise: a USB driver at the wireless data terminal side, a USB endpoint of the wireless data terminal and a USB endpoint of the terminal equipment;
the USB driver at the wireless data terminal side is connected with a baseband processing module of the wireless data terminal;
the USB endpoint of the wireless data terminal is connected with the USB endpoint of the terminal equipment via a USB data cable;
the USB endpoint of the terminal equipment is connected with the audio equipment driver of the terminal equipment.

When the terminal equipment is configured to use its audio equipment driver to access the USB sound card equipment to acquire the audio data from the wireless data terminal, the terminal equipment may comprise:
an audio equipment driver, which is configured to access the USB endpoint of the terminal equipment in a manner of accessing an interface of the USB sound card equipment, read and release a PCM code stream transmitted to the USB endpoint of the terminal equipment;
a UI, which is configured to access the audio equipment driver via an audio equipment interface, and transmit the PCM code stream to a physical sound card;
a physical sound card, which is configured to acquire an analog audio signal from the PCM code stream.

When the terminal equipment is configured to use its audio equipment driver to send the audio data to the USB sound card equipment, the terminal equipment may comprise:
a physical sound card, which is configured to acquire a PCM code stream from an analog audio signal;
a UI, which is configured to acquire the PCM code stream from the physical sound card, and transmit the PCM code stream to the audio equipment driver via an audio equipment interface of the audio equipment driver;
an audio equipment driver, which is configured to send the PCM code stream to the USB endpoint of the terminal equipment.

It can be seen that, compared with the existing technology, the method and device for transmitting USB audio data through a wireless data terminal provided by the present invention can abstract and optimize the USB audio data transmission channel according to the characteristics of audio data transmission, and fully utilize the powerful audio data processing capability of the terminal equipment to enhance the effectiveness of VOUSB in practical application.

In addition, the solution of the present invention further has the following characteristics and advantages:

Firstly, a USB audio data transmission channel between a wireless data terminal and a terminal equipment is set as the USB sound card equipment by adopting the standard USB AUDIO CLASS defined by the USB specification, so as to transmit audio data; the operation system of the broadly-used terminal equipment provides realization for an audio equipment driver which satisfies the USB specification by default, therefore the audio equipment driver accesses a USB endpoint of the terminal equipment in the a manner of accessing an interface of the USB sound card equipment, and the audio equipment driver reads and releases audio data read from the USB endpoint.

Secondly, a synchronous transmission method which adopts the USB standard has a good real-time performance in transmitting audio data, and the terminal equipment is provided with a standard driver, namely the audio equipment driver, for the synchronous transmission method, therefore reading and releasing the audio data from the USB endpoint of the terminal equipment are completed in the audio equipment driver, which has a higher processing priority than the processing in the application of UI; thus, the processing for the audio data has a good real-time performance when the operation system of the terminal equipment is heavily-loaded.

Finally, the UI accesses the audio equipment driver via an audio equipment interface and transmits the released audio data to a physical sound card; since the UI accesses the audio equipment driver via the audio equipment interface, the reliability of the UI on the audio equipment driver is reduced; wherein the audio equipment interface is a standard interface, When the UI accesses the audio equipment interface, it need not take notice of the details for realizing the audio equipment driver at the bottom layer; in addition, the operation system has a good portability, which can realize the UI in a simpler and more reliable way.

The invention is as defined by the attached independent claims 1 and 7.

### BRIEF DESCRIPTION OF THE DRAWINGS

Fig. 1 shows a schematic diagram illustrating a solution for realizing VOUSB in the existing technology;
Fig. 2 shows a block diagram illustrating a device for realizing USB audio data transmission through a wireless data terminal in the present invention;
Fig. 3 shows a schematic diagram of setting a USB audio data transmission channel as USB sound card equipment in the present invention;
Fig. 4 shows a transmission flowchart taking a wireless data terminal as an audio data receiver; and
Fig. 5 shows a transmission flowchart taking a wireless data terminal as an audio data transmitter.

### DETAILED DESCRIPTION

The present invention is further explained in details hereinafter with the drawings and embodiments.

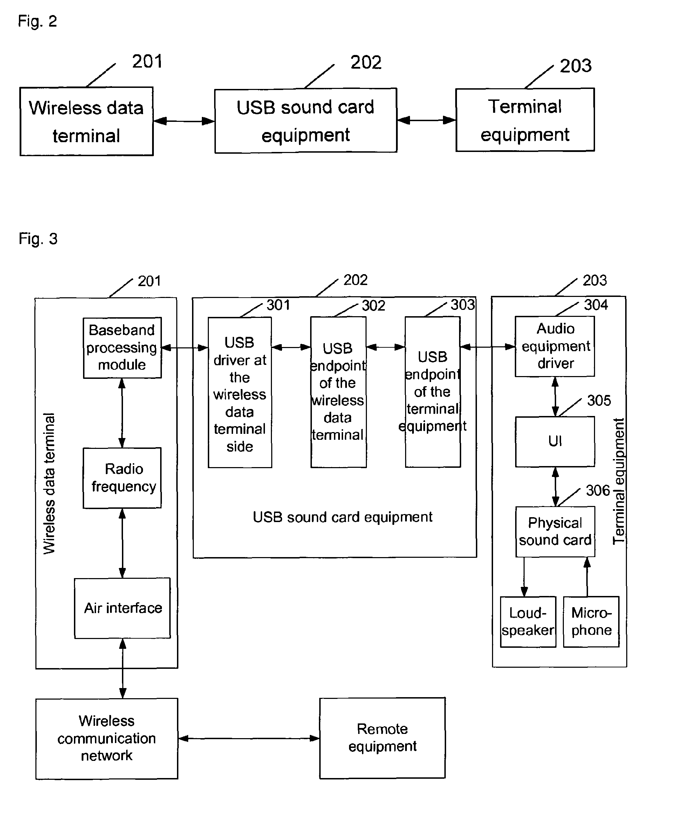

Shown as Fig. 2, the present invention provides a device for transmitting audio data over USB through a wireless data terminal 201, wherein the device mainly comprises a wireless data terminal 201, USB sound card equipment 202 and terminal equipment 203; wherein
the wireless data terminal 201 is configured to send audio data to the terminal equipment 203 through the USB sound card equipment 202, and further is configured to receive audio data from the terminal equipment 203 through the USB sound card equipment 202;
a USB audio data transmission channel between the wireless data terminal 201 and the terminal equipment 203 is set as the USB sound card equipment 202, which is configured to perform audio data transmission between the wireless data terminal 201 and the terminal equipment 203;
the terminal equipment 203 is configured to access the USB sound card equipment 202 through its own audio equipment driver to acquire audio data from the wireless data terminal 201, and further is configured to send audio data to the USB sound card equipment 202 through its own audio equipment driver.

Specifically, the audio equipment driver of the terminal equipment 203 accesses a USB endpoint of the terminal equipment 203 in a manner of accessing the USB sound card equipment 202 interface, reads and releases the audio data transmitted to the USB endpoint of the terminal equipment 203; subsequently the audio data is transmitted via a UI to a physical sound card to be decoded, subjected to D/A conversion; and finally the audio data is played by a loudspeaker. The audio data gathered by a microphone is subjected to A/D conversion and coded by the physical sound card, and the coded audio data is transmitted to the audio equipment driver via the UI to be compressed, and then the compressed audio data is transmitted to the USB endpoint of the terminal equipment 203 by the audio equipment driver in a manner of accessing the USB sound card equipment 202 interface.

Fig. 3 shows a schematic diagram of setting a USB audio data transmission channel as the USB sound card equipment 202 in the present invention. As shown in Fig. 3, compared with Fig. 1, in the present invention, a USB audio data transmission channel between the wireless data terminal 201 and the terminal equipment 203 is set as the USB sound card equipment 202 in accordance with a USB sound card application method of the USB specification. The USB audio data transmission channel is an audio data transmission channel among a USB driver at the wireless data terminal side 301, a USB endpoint of wireless data terminal 302, a USB endpoint of terminal equipment 303, and the USB data cable between this two USB endpoints. The key for setting a USB audio data transmission channel as the USB sound card equipment 202 is to set the USB audio data transmission channel as the USB sound card equipment 202 by adopting the standard USB AUDIO CLASS defined by the USB specification. Wherein the setting for the USB sound card equipment 202 is realized by the following steps: firstly, the wireless data terminal 201 side defines a USB endpoint of the wireless data terminal 302 transmitting the audio data as a sound card, and connects the USB endpoint of wireless data terminal 302 to USB endpoint of the terminal equipment 303 by the USB data cable; secondly, the terminal equipment 203 sends a request to the wireless data terminal 201 for acquiring such information as a device descriptor, a configuration descriptor and a descriptor assemble of the connected sound card; after receiving the request, the wireless data terminal 201 sends the requested information to the terminal equipment 203; subsequently, after acquiring the information and determining that the USB driver can be provided according to the information, the terminal equipment 203 loads a corresponding audio equipment driver 304 in accordance with the USB specification; finally, after acquiring all the descriptors, the terminal equipment 203 deems that the information of the connected sound card is complete, and the audio equipment driver 304 configures the sound card, and then the audio data transmission between the wireless data terminal 201 and the terminal equipment 203 can be realized after configuring successfully. By now, the setting process of the USB sound card equipment 202 is completed and the USB audio data transmission channel is set as the USB sound card equipment 202. The wireless data terminal 201 is connected to the USB driver at the wireless data terminal side 301 of the USB sound card equipment 202, and the terminal equipment 203 is connected to the USB endpoint of the terminal equipment 303 of the USB sound card equipment 202.

Different from the audio data processing capability of a physical sound card 306 such as a common USB sound card and its processing capability of directly sending the processed audio data to a loudspeaker to be played, although this USB sound card equipment 202 has a same access interface and a same using way as a physical sound card 306 does, and this USB could be regarded as an actual physical sound card 306 for users, the USB sound card equipment 202 only has an audio data transmission function in fact and does not have actual audio data processing capability, thus the USB sound card needs the help of a physical sound card 306 on the terminal equipment 203 to process the received audio data which needs to be processed. The wireless data terminal 201 will use a wireless communication network to transmit the audio data which is sent from the terminal equipment 203 to the wireless data terminal 201, to the remote equipment. The remote equipment can be a wireless data terminal 201 or terminal equipment 203. If the remote equipment needs to process the received audio data, in the case of the remote equipment being terminal equipment 203, the audio data is directly processed by a physical sound card 306 on the terminal equipment 203 and is subsequently played; in the case of the remote equipment being a wireless data terminal 201, the received audio data is transmitted to terminal equipment 203 connected with the wireless data terminal 201 through USB sound card equipment and is then played after being processed by a physical sound card 306 on the terminal equipment 203.

Since the USB audio data transmission channel between the wireless data terminal 201 and the terminal equipment 203 is set as the USB sound card equipment 202 by adopting the standard USB AUDIO CLASS defined by the USB specification to transmit audio data, and the operation system of the broadly-used terminal equipment 203 provides the realization for an audio equipment driver 304 which satisfies the USB specification by default. Regarding the audio data sent by the wireless data terminal 201 to the USB endpoint of the terminal equipment 303 of the USB sound card equipment 202, the audio equipment driver 304 accesses the USB endpoint of the terminal equipment 303 in the a manner of accessing a sound card equipment interface. When accessing the USB endpoint of the terminal equipment 303, the audio equipment driver 304 reads and releases the audio data sent to the USB endpoint of the terminal equipment 303. Compared with the existing way of reading and releasing the audio data by an application UI 305, the reading and releasing processes performed by the audio equipment driver 304 have a higher priority. Thus, the processing for the audio data has a good real-time performance even when the operation system of the terminal equipment 203 is heavily-loaded. In addition to accessing the USB endpoint of the terminal equipment 303 on a downlink, the audio equipment driver 304 can further provide an audio equipment interface for an uplink; wherein the audio equipment interface is a standard interface. When the UI 305 accesses the audio equipment interface, it need not take notice of the details for realizing the audio equipment driver 304 at the bottom layer. In addition, the operation system has a good portability, so that the UI 305 can access the audio equipment driver 304 via the audio equipment interface and transmit the audio data to the physical sound card 306, thereby reducing the reliability of the UI 305 on the audio equipment driver 304 and realizing the UI 305 in a simpler and more reliable way.

Specifically, when the terminal equipment 203 acquires the audio data through the USB sound card equipment 202, the audio equipment driver 304 is configured to access the USB endpoint of the terminal equipment 303 in the a manner of accessing the USB sound card equipment 202 interface, to read and release a PCM code stream transmitted to the USB endpoint of the terminal equipment 303; the UI 305 is configured to access the audio equipment driver 304 via the audio equipment interface and transmit the PCM code stream to the physical sound card 306; the physical sound card 306 is configured to acquire an analog audio signal from the PCM code stream.

When the terminal equipment 203 sends the audio data through the USB sound card equipment 202, the physical sound card 306 is configured to acquire a PCM bit steam from an analog audio signal; the UI 305 is configured to acquire the PCM code stream from the physical sound card 306 and transmit the PCM code stream to the audio equipment driver 304 via the audio equipment interface of the audio equipment driver 304; the audio equipment driver 304 is configured to send the PCM code stream to the USB endpoint of the terminal equipment 303.

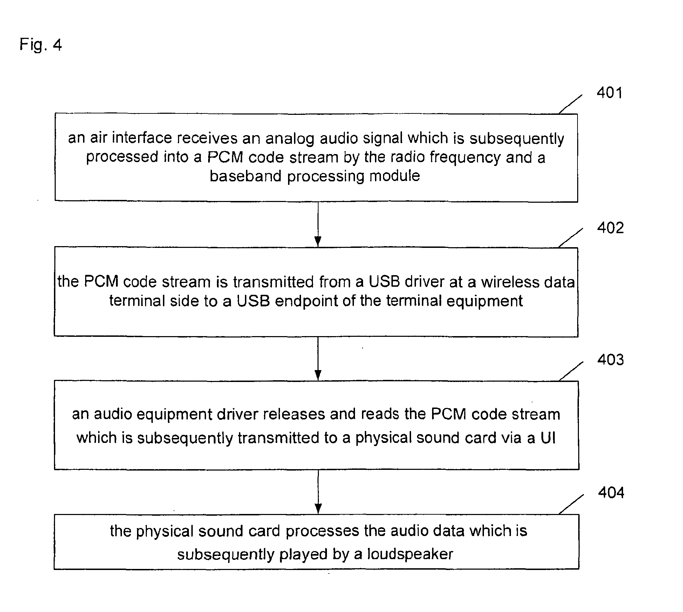

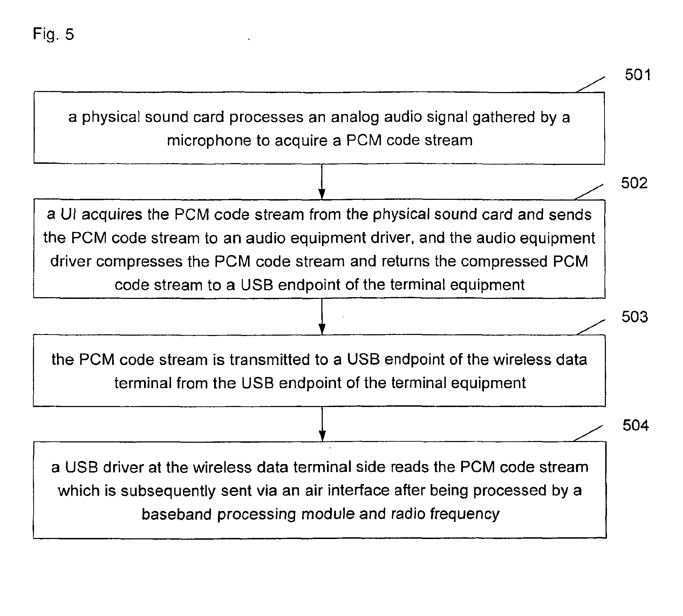

The process for realizing the audio data transmission by USB sound card equipment is shown as Fig. 4 and Fig. 5.

Fig. 4 shows a transmission flowchart taking a wireless data terminal as an audio data receiver. As shown in Fig. 4, an audio data transmission process comprises the following steps:
step 401: an air interface of the wireless data terminal receives an analog audio signal sent from remote equipment through a wireless communication network, and transmits the analog audio signal to a hardware, such as radio frequency, to be demodulated; subsequently, a baseband processing module performs amplification and digital filtering processing on the demodulated audio signal to acquire a PCM code stream;
step 402: the PCM code stream acquired by the processing is transmitted to a USB driver at the wireless data terminal side of the USB sound card equipment by the baseband processing module of the wireless data terminal; subsequently, the PCM code stream is transmitted to a USB endpoint of the terminal equipment of the USB sound card equipment passing through a USB endpoint of the wireless data terminal and a USB data cable in accordance with a synchronous transmission mode of the USB standard;
step 403: after the PCM code stream is transmitted to the USB endpoint of the terminal equipment, an audio equipment driver of the terminal equipment accesses the USB endpoint of the terminal equipment in a manner of accessing an interface of the USB sound card equipment, reads and releases the PCM code stream transmitted to the USB endpoint of the terminal equipment; subsequently, a UI accesses the audio equipment driver via an audio equipment interface and transmits the PCM code stream to a physical sound card;
step 404: the physical sound card performs such processing as decoding and D/A conversion on the transmitted PCM code stream to acquire an analog audio signal, and finally transmits the analog audio signal to a loudspeaker to be played.

Fig. 5 shows a transmission flowchart taking a wireless data terminal as an audio data transmitter. As shown in Fig. 5, the audio data transmission process comprises the following steps:
step 501: a microphone of the terminal equipment transmits a gathered analog audio signal to the physical sound card, and the physical sound card performs such processing as A/D conversion and coding etc. on the analog audio signal to acquire a digital audio signal in the form of PCM code stream;
step 502: the UI of the terminal equipment acquires the PCM code stream from the physical sound card and transmits the PCM code stream to the audio equipment driver via the audio equipment interface of the audio equipment driver, the audio equipment driver compresses the PCM code stream and then transmits the PCM code stream back to the terminal equipment USB endpoint of the USB sound card equipment in a manner of accessing the USB sound card equipment interface;
step 503: after the PCM code stream is transmitted to the USB endpoint of the terminal equipment of the USB sound card equipment, the PCM code stream is transmitted to the USB endpoint of the wireless data terminal of the USB sound card equipment via a USB data cable in accordance with the synchronous transmission mode of the USB standard;
step 504: the baseband processing module of the wireless data terminal uses the USB driver at the wireless data terminal side to acquire the PCM code stream transmitted to the USB endpoint of the wireless data terminal, performs amplification and digital filtering on the PCM code stream, the processed PCM code stream is then modulated into an analog audio signal by the radio frequency, finally, the analog audio signal is sent via the air interface to the remote equipment through the wireless communication network.

What are described above are only preferred embodiments of the present invention and are not used for limiting the protection scope of the present invention.

## Claims

1. A method for transmitting audio data over a Universal Serial Bus (USB), **characterized in that** the method comprises the steps of:
setting a USB audio data transmission channel between a wireless data terminal and a terminal equipment as a USB sound card equipment by adopting a standard USB AUDIO CLASS as defined by a USB specification;
sending, by the wireless data terminal, audio data to the terminal equipment through the USB sound card equipment (401∼402); accessing, by the terminal equipment, the USB sound card equipment and acquiring the audio data through an audio equipment driver of the terminal equipment (403); and
sending, by the terminal equipment, audio data to the USB sound card equipment through the audio equipment driver of the terminal equipment (501∼502); receiving, by the wireless data terminal, the audio data through the USB sound card equipment (503∼504).

2. The method according to claim 1, wherein the step of setting the USB audio data transmission channel between the wireless data terminal and the terminal equipment is set as the USB sound card equipment comprises:
defining, by the wireless data terminal, a USB endpoint of the wireless data terminal as a sound card, wherein the USB endpoint of the wireless data terminal is for transmitting the audio data; and connecting the USB endpoint of the wireless data terminal to a USB endpoint of the terminal equipment via a USB data cable;
sending, by the terminal equipment, a request to the wireless data terminal for acquiring a device descriptor, a configuration descriptor and a descriptor assemblage; after receiving the request, sending, by the wireless data terminal, the device descriptor, the configuration descriptor and the descriptor assemblage to the terminal equipment; and
after determining that a USB driver can be provided according to the device descriptor, the configuration descriptor and the descriptor assemblage, loading, by the terminal equipment, the audio equipment driver in accordance with the USB specification defining the standard USB AUDIO CLASS, and configuring, by the audio equipment driver, the sound card.

3. The method according to claim 1, wherein the terminal equipment comprises the audio equipment driver, a User Interface UI, and a physical sound card; and
the step of accessing, by the terminal equipment, the USB sound card equipment and acquire the audio data through the audio equipment driver of the terminal equipment comprises: accessing, by the audio equipment driver, the USB sound card equipment in a manner of accessing an interface of the USB sound card equipment, releasing and reading a Pulse Code Modulation (PCM) code stream transmitted to the USB sound card equipment; and accessing, by the UI, the audio equipment driver via an audio equipment interface, and transmitting the PCM code stream to the physical sound card.

4. The method according to claim 1, wherein the terminal equipment comprises the audio equipment driver, a UI and a physical sound card; and
the step of sending, by the terminal equipment, audio data to the USB sound card equipment through the audio equipment driver of the terminal equipment comprises: acquiring, by the physical sound card, a PCM code stream from an analog audio signal; acquiring, by the UI, the PCM code stream from the physical sound card, and transmitting the PCM code stream to the audio equipment driver via an audio equipment interface of the audio equipment driver; and sending, by the audio equipment driver, the PCM code stream to the USB sound card equipment.

5. The method according to any of claims 1 to 4, wherein the step of sending, by the wireless data terminal, the audio data to the terminal equipment through the USB sound card equipment comprises: transmitting, by a baseband processing module of the wireless data terminal, a PCM code stream acquired after being processed to a USB driver at the wireless data terminal side of the USB sound card equipment.

6. The method according to any of claims 1 to 4, wherein the step of receiving, by the wireless data terminal, the audio data through the USB sound card equipment comprises: acquiring, by a baseband processing module of the wireless data terminal, a PCM code stream transmitted to a USB endpoint of the wireless data terminal through a USB driver at the wireless data terminal side of the USB sound card equipment.

7. A device for transmitting audio data over a Universal Serial Bus (USB), **characterized in that** the device comprises a wireless data terminal (201), a USB sound card equipment (202), and a terminal equipment (203), wherein
the wireless data terminal (201) is configured to send audio data to the terminal equipment (203) through the USB sound card equipment (202), and to receive audio data sent by the terminal equipment (203) through the USB sound card equipment (202);
the USB sound card equipment (202) is configured as a USB audio data transmission channel between the wireless data terminal (201) and the terminal equipment (203) for transmitting audio data between the wireless data terminal (201) and the terminal equipment (203) by adopting a standard USB AUDIO CLASS as defined by a USB specification; and
the terminal equipment (203) is configured to access the USB sound card equipment (202) to acquire the audio data sent by the wireless data terminal (201) and send audio data to the USB sound card equipment (202) though an audio equipment driver (304) of the terminal equipment (203).

8. The device according to claim 7, wherein the USB sound card equipment (202) comprises: a USB driver at the wireless data terminal side (301), a USB endpoint of the wireless data terminal (302) and a USB endpoint of the terminal equipment (303);
the USB driver at the wireless data terminal side (301) is connected with a baseband processing module of the wireless data terminal (201);
the USB endpoint of the wireless data terminal (302) is connected with the USB endpoint of the terminal equipment (303) via a USB data cable; and
the USB endpoint of the terminal equipment (303) is connected with the audio equipment driver (304) of the terminal equipment (203).

9. The device according to claim 8, wherein the terminal equipment (203) comprises the audio equipment driver (304), a User Interface UI (305), and a physical sound card (306), wherein
the audio equipment driver (304) is configured to access the USB endpoint of the terminal equipment (303) in a manner of accessing an interface of the USB sound card equipment (202), and to read and release a PCM code stream transmitted to the USB endpoint of the terminal equipment (303);
the UI (305) is configured to access the audio equipment driver (304) via an audio equipment interface, and transmit the PCM code stream to the physical sound card (306); and
the physical sound card (306) is configured to acquire an analog audio signal from the PCM code stream.

10. The device according to claim 8, wherein the terminal equipment (203) comprises a physical sound card (306), a User Interface UI (305), and the audio equipment driver (304), wherein
the physical sound card (306) is configured to acquire a PCM code stream from an analog audio signal;
the UI (305) is configured to acquire the PCM code stream from the physical sound card (306), and transmit the PCM code stream to the audio equipment driver (304) via an audio equipment interface of the audio equipment driver (304); and
the audio equipment driver (304) is configured to send the PCM code stream to the USB endpoint of the terminal equipment (303).

## Patentansprüche

1. Verfahren zur Übertragung von Audiodaten über einen Universal Serial Bus (USB), **dadurch gekennzeichnet, dass** das Verfahren folgende Schritte umfasst:
Einstellen eines USB-Audiodatenübertragungskanals zwischen einem drahtlosen Datenendgerät und einer Endgerät-Ausrüstung wie beispielsweise einer USB-Soundkartenausrüstung durch Übernahme einer standardmäßigen USB-AUDIO-KLASSE, wie definiert von einer USB-Spezifikation;
Senden von Audiodaten von dem drahtlosen Datenendgerät an die Endgerät-Ausrüstung durch die USB-Soundkartenausrüstung (401∼402); Zugriff von der Endgerät-Ausrüstung auf die USB-Soundkartenausrüstung und Erfassung der Audiodaten durch einen Audiogerätetreiber der Endgerät-Ausrüstung (403); und
Senden von Audiodaten von der Endgerät-Ausrüstung an die USB-Soundkartenausrüstung durch den Audiogerätetreiber der Endgerät-Ausrüstung (501∼502); Empfangen der Audiodaten von dem drahtlosen Datenendgerät durch die USB-Soundkartenausrüstung (503∼504).

2. Verfahren nach Anspruch 1, wobei der Schritt, in dem der USB-Audiodatenübertragungskanal zwischen dem drahtlosen Datenendgerät und der Endgerät-Ausrüstung als die USB-Soundkartenausrüstung eingestellt wird, umfasst, dass:
das drahtlose Datenendgerät einen USB-Endpunkt des drahtlosen Datenendgerätes als eine Soundkarte definiert, wobei der USB-Endpunkt des drahtlosen Datenendgerätes zur Übertragung der Audiodaten ist; und der USB-Endpunkt des drahtlosen Datenendgerätes mit einem USB-Endpunkt der Endgerät-Ausrüstung über ein USB-Datenkabel verbunden wird;
die Endgerät-Ausrüstung eine Anfrage an das drahtlose Datenendgerät sendet, um einen Gerät-Deskriptor, einen Konfigurations-Deskriptor und eine Deskriptor-Assemblage zu empfangen; nach dem Empfangen der Anfrage das drahtlose Datenendgerät den Gerät-Deskriptor, den Konfigurations-Deskriptor und die Deskriptor-Assemblage an die Endgerät-Ausrüstung sendet; und
nachdem bestimmt wurde, dass ein USB-Treiber gemäß dem Gerät-Deskriptor, dem Konfigurations-Deskriptor und der Deskriptor-Assemblage bereitgestellt werden kann, die Endgeräteausrüstung den Audiogerätetreiber entsprechend der USB-Spezifikation, welche die standardmäßige USB-AUDIO-KLASSE definiert, lädt, und der Audiogerätetreiber die Soundkarte konfiguriert.

3. Verfahren nach Anspruch 1, wobei die Endgerät-Ausrüstung den Audiogerätetreiber, eine Benutzerschnittstelle UI und eine physische Soundkarte umfasst; und
der Schritt, in dem die Endgerät-Ausrüstung auf die USB-Soundkartenausrüstung zugreift und die Audiodaten durch den Audiogerätetreiber der Endgerät-Ausrüstung erfasst, umfasst, dass: der Audiogerätetreiber auf die USB-Soundkartenausrüstung in einer Weise zugreift, in der auf eine Schnittstelle der USB-Soundkartenausrüstung zugegriffen wird, ein PCM (Pulse Code Modulation)-Codestrom, übertragen an die USB-Soundkartenausrüstung, freigegeben und gelesen wird; und die Benutzerschnittstelle über eine Audiogeräteschnittstelle auf den Audiogerätetreiber zugreift und den PCM-Codestrom an die physische Soundkarte überträgt.

4. Verfahren nach Anspruch 1, wobei die Endgerät-Ausrüstung den Audiogerätetreiber, eine Benutzerschnittstelle und eine physische Soundkarte umfasst; und
der Schritt, indem die Endgerät-Ausrüstung Audiodaten an die USB-Soundkartenausrüstung durch den Audiogerätetreiber der Endgerät-Ausrüstung sendet, umfasst, dass: die physische Soundkarte einen PCM-Codestrom von einem analogen Audiosignal erfasst; die Benutzerschnittstelle den PCM-Codestrom von der physischen Soundkarte erfasst und den PCM-Code über eine Audiogeräteschnittstelle des Audiogerätetreibers an den Audiogerätetreiber überträgt; und der Audiogerätetreiber den PCM-Codestrom an die USB-Soundkartenausrüstung überträgt.

5. Verfahren nach einem der Ansprüche 1 bis 4, wobei der Schritt, in dem das drahtlose Datenendgerät die Audiodaten an die Endgerät-Ausrüstung durch die USB-Soundkartenausrüstung sendet, umfasst, dass: ein Basisband-Verarbeitungsmodul des drahtlosen Datenendgerätes einen PCM-Codestrom, erfasst nach der Verarbeitung, an einen USB-Treiber an der Seite des drahtlosen Datenendgerätes der USB-Soundkartenausrüstung überträgt.

6. Verfahren nach einem der Ansprüche 1 bis 4, wobei der Schritt, in dem das drahtlose Datenendgerät die Audiodaten durch die USB-Soundkartenausrüstung empfängt, umfasst, dass: ein Basisband-Verarbeitungsmodul des drahtlosen Datenendgerätes einen PCM-Codestrom, übertragen an einen USB-Endpunkt des drahtlosen Datenendgerätes durch einen USB-Treiber an der Seite des drahtlosen Datenendgerätes der USB-Soundkartenausrüstung, erfasst.

7. Vorrichtung zur Übertragung von Audiodaten über einen Universal Serial Bus (USB), **dadurch gekennzeichnet, dass** die Vorrichtung ein drahtloses Datenendgerät (201), eine USB-Soundkartenausrüstung (202) und eine Endgerät-Ausrüstung (203) umfasst, wobei
das drahtlose Datenendgerät (201) konfiguriert ist, um Audiodaten durch die USB-Soundkartenausrüstung (202) an die Endgerät-Ausrüstung (203) zu senden und Audiodaten, gesendet von der Endgerät-Ausrüstung (203) durch die USB-Soundkartenausrüstung (202), zu empfangen;
die USB-Soundkartenausrüstung (202) als ein USB-Audiodatenübertragungskanal zwischen dem drahtlosen Datenendgerät (201) und der Endgerät-Ausrüstung (203) konfiguriert ist, um Audiodaten zwischen dem drahtlosen Datenendgerät (201) und der Endgerät-Ausrüstung (203) durch Übernahme einer standardmäßigen USB-AUDIO-KLASSE, wie von einer USB-Spezifikation definiert, zu übertragen; und
die Endgerät-Ausrüstung (203) für den Zugriff auf die USB-Soundkartenausrüstung (202) konfiguriert ist, um die von dem drahtlosen Datenendgerät (201) gesendeten Audiodaten zu erfassen und die Audiodaten durch einen Audiogerätetreiber (304) der Endgerät-Ausrüstung (203) an die USB-Soundkartenausrüstung (203) zu senden.

8. Gerät nach Anspruch 7, wobei die USB-Soundkartenausrüstung (202) umfasst: einen USB-Treiber an der Seite des drahtlosen Datenendgerätes (301), einen USB-Endpunkt des drahtlosen Datenendgerätes (302) und einen USB-Endpunkt der Endgerät-Ausrüstung (303);
der USB-Treiber an der Seite des drahtlosten Datenendgerätes (301) mit einem Basisband-Verarbeitungsmodul des drahtlosen Datenendgerätes (201) verbunden ist;
der USB-Endpunkt des drahtlosen Datenendgerätes (302) mit dem USB-Endpunkt der Endgerät-Ausrüstung (303) über ein USB-Datenkabel verbunden ist; und
der USB-Endpunkt der Endgerät-Ausrüstung (303) mit dem Audiogerätetreiber (304) der Endgerät-Ausrüstung (203) verbunden ist.

9. Vorrichtung nach Anspruch 8, wobei die Endgerät-Ausrüstung (203) den Audiogerätetreiber (304), eine Benutzerschnittstelle UI (305) und eine physische Soundkarte (306) umfasst, wobei
der Audiogerätetreiber (304) konfiguriert ist, um auf den USB-Endpunkt der Endgerät-Ausrüstung (303) in einer Weise zuzugreifen, dass auf eine Schnittstelle der USB-Soundkartenausrüstung (202) zugegriffen wird und ein PCM-Codestrom, übertragen an den USB-Endpunkt der Endgerät-Ausrüstung (303), gelesen und freigegeben wird;
die UI (305) konfiguriert ist, um über eine Audiogeräteschnittstelle auf den Audiogerätetreiber (304) zuzugreifen und den PCM-Codestrom an die physische Soundkarte (306) zu übertragen; und
die physische Soundkarte (306) konfiguriert ist, um ein analoges Audiosignal von dem PCM-Codestrom zu erfassen.

10. Vorrichtung nach Anspruch 8, wobei die Endgerät-Ausrüstung (203) eine physische Soundkarte (306), eine Benutzerschnittstelle UI (305) und den Audiogerätetreiber (304) umfasst, wobei
die physische Soundkarte (306) konfiguriert ist, einen PCM-Codestrom von einem analogen Audiosignal zu erfassen;
die UI (305) konfiguriert ist, den PCM-Codestrom von der physischen Soundkarte (306) zu erfassen und den PCM-Codestrom an den Audiogerätetreiber (304) über eine Audiogeräteschnittstelle des Audiogerätetreibers (304) zu übertragen; und
der Audiogerätetreiber (304) konfiguriert ist, den PCM-Codestrom an den USB-Endpunkt der Endgerät-Ausrüstung (303) zu senden.

## Revendications

1. Méthode de transmission de données audio sur un bus série universel (USB), **caractérisée en ce que** la méthode comprend les étapes suivantes :
établir un canal de transmission de données audio USB entre un terminal de données sans fil et un équipement de terminal en tant qu'équipement de carte son USB en adoptant une norme USB AUDIO CLASS telle que définie par une spécification USB ;
envoyer, par le terminal de données sans fil, des données audio à l'équipement de terminal par l'intermédiaire de l'équipement de carte son USB (401 402) ; accéder, par l'équipement de terminal, à l'équipement de carte son USB et acquérir des données audio par l'intermédiaire d'un pilote d'équipement audio de l'équipement de terminal (403) ; et
envoyer, par l'équipement de terminal, des données audio à l'équipement de carte son USB par l'intermédiaire du pilote d'équipement audio de l'équipement de terminal (501 ∼ 502) ; recevoir, par le terminal de données sans fil, des données audio par l'intermédiaire de l'équipement de carte son USB (503 ∼ 504).

2. Méthode selon la revendication 1, dans laquelle l'étape d'établissement du canal de transmission de données audio USB entre le terminal de données sans fil et l'équipement de terminal est établie comme l'équipement de carte son USB comprend :
définir, par le terminal de données sans fil, un point final USB du terminal de données sans fil en tant que carte son, où le point final USB du terminal de données sans fil est destiné à transmettre les données audio ; et connecter le point final USB du terminal de données sans fil à un point final USB de l'équipement de terminal via un câble de données USB ;
envoyer, par l'équipement de terminal, une demande au terminal de données sans fil, acquisition d'un descripteur de dispositif, d'un descripteur de configuration et d'un assemblage de descripteur ; après réception de la demande, envoyer, par le terminal de données sans fil, le descripteur de dispositif, le descripteur de configuration et l'assemblage de descripteur à l'équipement de terminal ; et
après le fait de déterminer qu'un pilote USB peut être fourni selon le descripteur de dispositif, le descripteur de configuration et l'assemblage de descripteur, le charger, par l'équipement de terminal, le pilote d'équipement audio en conformité avec la spécification USB définissant la norme USB AUDIO CLASS, et configurer, par le pilote d'équipement audio, la carte son.

3. Méthode selon la revendication 1, dans laquelle l'équipement de terminal comprend le pilote d'équipement audio, une interface utilisateur UI, et une carte de son physique ; et
l'étape d'accès, par l'équipement de terminal, à l'équipement de carte son USB et l'acquisition de données audio par l'intermédiaire du pilote d'équipement audio de l'équipement de terminal comprend : l'accès, par le pilote d'équipement audio, à l'équipement de carte son USB de manière à accéder à une interface de l'équipement de carte son USB, libérant et lisant un flux de code de modulation par impulsion et codage (PCM) transmis à l'équipement de carte son USB ; et l'accès, par l'UI, au pilote d'équipement audio via une interface d'équipement audio, et la transmission du flux de code PCM à la carte de son physique.

4. Méthode selon la revendication 1, dans laquelle l'équipement de terminal comprend le pilote d'équipement audio, une UI, et une carte de son physique ; et l'étape d'envoi, par l'équipement de terminal, de données audio à l'équipement de carte son USB par l'intermédiaire du pilote d'équipement audio de l'équipement de terminal comprend : l'acquisition, par la carte de son physique, d'un flux de code PCM pour un signal audio analogique ; l'acquisition, par l'UI, du flux de code PCM à partir de la carte de son physique, et la transmission du flux de code PCM au pilote d'équipement audio via une interface d'équipement audio du pilote d'équipement audio ; et l'envoi, par le pilote d'équipement audio, du flux de code PCM à l'équipement de carte son USB.

5. Méthode selon l'une quelconque des revendications 1 à 4, dans laquelle l'étape d'envoi, par le terminal de données sans fil, des données audio à l'équipement de terminal par l'intermédiaire de l'équipement de carte son USB comprend : la transmission, par un module de traitement de bande de base du terminal de données sans fil, d'un flux de code PCM acquis après avoir été traité vers un pilote USB du côté terminal de données sans fil de l'équipement de carte son USB.

6. Méthode selon l'une quelconque des revendications 1 à 4, dans laquelle l'étape de réception, par le terminal de données sans fil, des données audio par l'intermédiaire de l'équipement de carte son USB comprend : l'acquisition, par un module de traitement de bande de base du terminal de données sans fil, d'un flux de code PCM transmis à un point final USB du terminal de données sans fil par l'intermédiaire d'un pilote USB du côté terminal de données sans fil de l'équipement de carte son USB.

7. Dispositif de transmission de données audio sur un bus série universel (USB), **caractérisé en ce que** le dispositif comprend un terminal de données sans fil (201), un équipement de carte son USB (202) et un équipement de terminal (203), dans lequel
le terminal de données sans fil (201) est configuré pour envoyer des données audio à l'équipement de terminal (203) par l'intermédiaire de l'équipement de carte son USB (202), et pour recevoir des données audio envoyées par l'équipement de terminal (203) par l'intermédiaire de l'équipement de carte son USB (202) ;
l'équipement de carte son USB (202) est configuré comme un canal de transmission de données audio USB entre le terminal de données sans fil (201) et l'équipement de terminal (203) pour transmettre des données audio entre le terminal de données sans fil (201) et l'équipement de terminal (203) en adoptant une norme USB AUDIO CLASS telle que définie par une spécification USB ; et
l'équipement de terminal (203) est configuré pour accéder à l'équipement de carte son USB (202) pour acquérir les données audio envoyées par le terminal de données sans fil (201) et envoyer des données audio à l'équipement de carte son USB (202) par l'intermédiaire d'un pilote d'équipement audio (304) de l'équipement de terminal (203).

8. Dispositif selon la revendication 7, dans lequel l'équipement de carte son USB (202) comprend : un pilote USB du côté terminal de données sans fil (301), un point final USB du terminal de données sans fil (302) et un point final USB de l'équipement de terminal (303) ;
le pilote USB du côté terminal de données sans fil (301) est connecté à un module de traitement de bande de base du terminal de données sans fil (201) ;
le point final USB du terminal de données sans fil (302) est connecté au point final USB de l'équipement de terminal (303) via un câble de données USB ; et
le point final USB de l'équipement de terminal (303) est connecté au pilote d'équipement audio (304) de l'équipement de terminal (203).

9. Dispositif selon la revendication 8, dans lequel l'équipement de terminal (203) comprend le pilote d'équipement audio (304), une interface utilisateur UI (305) et une carte de son physique (306), dans lequel
le pilote d'équipement audio (304) est configuré pour accéder au point final USB de l'équipement de terminal (303) de manière à accéder à une interface de l'équipement de carte son USB (202), et à lire et libérer un flux de code PCM transmis au point final USB de l'équipement de terminal (303) ;
l'UI (305) est configurée pour accéder au pilote d'équipement audio (304) via une interface d'équipement audio, et transmettre le flux de code PCM à la carte de son physique (306) ; et
la carte de son physique (306) est configurée pour acquérir un signal audio analogique du flux de code PCM.

10. Dispositif selon la revendication 8, dans lequel l'équipement de terminal (203) comprend une carte de son physique (306), une interface utilisateur UI (305) et le pilote d'équipement audio (304), dans lequel
la carte de son physique (306) est configurée pour acquérir un flux de code PCM à partir d'un signal audio analogique ;
l'UI (305) est configurée pour acquérir le flux de code PCM depuis la carte de son physique (306) et transmettre le flux de code PCM au pilote d'équipement audio (304) via une interface d'équipement audio du pilote d'équipement audio (304) ; et
le pilote d'équipement audio (304) est configuré pour envoyer le flux de code PCM au point final USB de l'équipement de terminal (303).
